# EUROPEAN PATENT SPECIFICATION

(11) **EP 1 889 650 B1**
(45) Date of publication and mention of the grant of the patent: **08.06.2011**
(21) Application number: 07253101.5
(22) Date of filing: 08.08.2007
(51) Int. Cl.: B01D 53/32, H01M 8/24, H01M 8/02, H01M 8/12

(54) **Electrochemical devices**
Elektrochemische Vorrichtungen
Dispositifs électrochimiques

(30) Priority: 10.08.2006 JP 2006218344
(43) Date of publication of application: 20.02.2008
(73) Proprietor: NGK Insulators, Ltd., Nagoya-City, Aichi Pref. 467-8530 (JP)
(72) Inventor: Ichigi, Takenori, c/o NGK Insulators, Ltd., Mizuho-ku, Nagoya City, Aichi-ken, 467-8530 (JP); Ryu, Takashi, c/o NGK Insulators, Ltd., Mizuho-ku, Nagoya City, Aichi-ken, 467-8530 (JP); Takase, Naoya, c/o NGK Insulators, Ltd., Mizuho-ku, Nagoya City, Aichi-ken, 467-8530 (JP)
(74) Representative: Paget, Hugh Charles Edward

(56) References cited:
- EP-A- 1 463 139
- WO-A-2005/055350
- JP-A- 11 185 793
- US-A- 6 033 632
- US-A1- 2004 219 423
- US-A1- 2005 230 269

## Description

### Field of the Invention

The present invention relates to an electrochemical device such as solid oxide fuel cell.

### BACKGROUND ARTS

An electromotive force obtained by a single solid oxide fuel cell is about 1 volt. It is thus required to laminate (stack) a plurality of the cells for obtaining a large output power. The problem is how to increase a number of stacked cells in a smaller size for obtaining a larger output power.

Solid oxide fuel cells are generally divided into two categories; a planar type and a tubular type. According to a solid oxide fuel cell having a shape of a cylinder, dead spaces are formed between the adjacent cells. The efficiency of power generation per a unit volume is low, and an improvement of the generated power is limited on the structural viewpoint.
On the other hand, according to planar type solid oxide fuel cells, many planar type single cells are laminated in vertical direction and the adjoining cells are separated with separators, respectively. Fuel or oxidizing gas is passed through spaces between the single cells and separators, respectively. The temperature of the gas is as high as, for example, 800 to 1000°C, and the temperature of its manifold portion becomes high at a some degree. According to such device, it is difficult to seal many gas flow routes with the manifold so that fuel and oxidizing gases do not contact each other. In a practical assembling process, it is necessary to laminate many planar type single cells in vertical direction and to apply a pressure thereon. This process requires skilled persons and the productivity is low. Further, the cells are susceptible to fracture so that it is difficult to stack many cells in practical point of view.

In a stack structure of Japanese patent publication H11-185793A, a plurality of through holes are formed in a planar type cell and each cell is supported with a gas supply tube. Fuel gas is supplied to the inside of each cell, and oxidizing gas is passed to the outside of each cell.

### DISCLOSURE OF THE INVENTION

In the structure described in Japanese patent publication H11-185793A, it is necessary to support each cell with the corresponding supply tube one by one. The structure of sealing is thus complex requiring many parts. It is thus difficult to reduce the entire size and the production cost is high.

An object of the present invention is to enable the stacking of many cells, to avoid the fracture of the stacked cells, to simplify the seal structure and thereby to reduce a number of necessary parts.

The present invention provides an electrochemical device as set out in claim 1.

It is thereby possible to avoid excessive load onto each electrochemical cell and the fracture of the cells, so that many cells can be stacked together. Moreover, the flow route for the first gas is formed between the cell and the adjacent supporting member, and the metal manifold and supporting members are connected with each other to provide manifold structure for performing the supply of the gas into and the discharge of the gas from the flow route. The gas seal structure can be thereby simplified.

### BRIEF DESCRIPTION OF THE DRAWINGS

Fig. 1(a) is a front view showing a supporting member 1, Fig. 1(b) is a bottom view showing the supporting member 1 and Fig. 1(c) is a side view showing the supporting member 1.
Fig. 2(a) is a perspective view showing an electrochemical cell 11, Fig. 2(b) is a perspective view showing a sealing member 8, and Fig. 2(c) is a perspective view showing an interconnector 9.
Fig. 3 is an exploded perspective view of an assembly.
Fig. 4(a) is a cross sectional view showing a supporting member 1 and an electrochemical cell 11, Fig. 4 (b) is a cross sectional view showing the supporting member 1, the electrochemical cell 11 and a sealing member 8, and Fig. 4(c) is a cross sectional view showing the supporting member 1, the electrochemical cell 11, the sealing member 8 and an interconnector 9.
Fig. 5(a) is a plan view showing a manifold member 20, and Fig. 5(b) is a side view showing the manifold member 20.
Fig. 6 is a perspective view showing an assembly 30 mounted on the manifold member 20.
Fig. 7 is a perspective view showing the assemblies of Fig. 6 electrically connected with each other through electrical collecting members 35.

### Preferred Embodiments of the Invention

According to the present invention, the electrochemical cell has planar shape, which is not limited to a flat plate and includes a curved sheet and arc-shaped sheet. According to the present invention, the electrochemical cell has a first electrode contacting a first gas, a sold electrolyte film and a second electrode contacting a second gas.

The first and second electrodes are selected from an anode and a cathode. In the case that one of these is an anode, the other is a cathode. At the same time, the first and second gases are selected from an oxidizing gas and a reducing gas.

The oxidizing gas is not particularly limited as far as oxygen ions can be supplied to a solid electrolyte film from the gas. The gas includes air, diluted air, oxygen and diluted oxygen. The reducing gas includes hydrogen, carbon monoxide, methane or the mixtures thereof.

An electrochemical cell means a cell performing an electrochemical reaction, in the invention. For example, an electrochemical cell includes an oxygen pump and a high temperature vapor electrolyte cell. The high temperature vapor electrolyte cell can be used as a hydrogen production device, and also as a removing system of water vapor. Further, the electrochemical cell can be used as a decomposition cell for NO_{X}, SO_{X}. This decomposition cell can be used as a purification apparatus for discharge gas from motor vehicles, power generation devices or the like. In this case, oxygen in the discharge gas is removed through a solid electrolyte film while NO_{X} is electrolyzed into N₂ and O₂⁻, and the oxygen thus produced by this decomposition can be also removed. Further, by this process, vapor in the discharge gas is electrolyzed to produce hydrogen and oxygen, and the produced hydrogen reduces NOx to N₂. Further, in a preferable embodiment, the electrochemical cell is a solid oxide fuel cell.

The material for a solid electrolyte is not limited particularly, and includes any oxide ion conductor. For example, it may be yttria-stabilized zirconia or yttria partially-stabilized zirconia. In the case of NOx decomposition cell, cerium oxide is also preferable.

The cathode material is preferably lanthanum-containing perovskite-type composite oxide, more preferably lanthanum manganite or lanthanum cobaltite, and most preferably lanthanum manganite. Into lanthanum cobaltite and lanthanum manganite, strontium, calcium, chromium, cobalt (in the case of lanthanum manganite), iron, nickel, aluminum or the like may be doped. Further, the cathode material may be palladium, platinum, ruthenium, platinum-zirconia cermet, palladium-zirconia cermet, ruthenium-zirconia cermet, platinum-cerium oxide cermet, palladium-cerium oxide cermet, and ruthenium-cerium oxide cermet.

As the anode materials, platinum-zirconia cermet, platinum, nickel, nickel-zirconia cermet, platinum-cerium oxide cermet, nickel- cerium oxide cermet, ruthenium, ruthenium-zirconia cermet and the like are preferable.

The construction of each electrochemical cell is not particularly limited. The electrochemical cell may be consisting of three layers of an anode, a cathode and a solid electrolyte layer. Alternatively, the electrochemical cell may have, for example, a porous layer in addition to the anode, cathode and solid electrolyte layer.

The construction of the metal supporting member supporting the electrochemical cell is not particularly limited. Further, a metal forming the supporting member is not limited as far as it is resistant against oxidation and reduction at a working temperature of the electrochemical cell. The metal may be pure metal or an alloy, and may preferably be nickel, a nickel based alloy such as Inconel and Nichrome, an iron based alloy such as stainless steel or a cobalt based alloy such as Stellite.

The shape of the metal manifold member supporting the supporting member is not particularly limited. Although the shape may preferably be a flat plate, the planar shape is not particularly limited. The gas supply hole and gas discharge hole both communicated with the flow route for the first gas are provided in the manifold member, and number, dimension and position of the supply and discharge holes are not particularly limited. Further, the metal forming the manifold member is not limited as far as it is resistant against oxidation and reduction at a working temperature of the electrochemical cell. The metal may be pure metal or an alloy, and may preferably be nickel, a nickel based alloy such as Inconel and Nichrome, an iron based alloy such as stainless steel or a cobalt based alloy such as Stellite.

According to a preferred embodiment, a plurality of supporting members are provided on a single manifold member. Further, according to a preferred embodiment, a flow route for the second gas is formed between the supporting members. The gas seal structure can be thereby further simplified.

According to a preferred embodiment, an interconnector is provided between a plurality of supporting members, and the flow route for the second gas is formed between the interconnector and electrochemical cell. Further, according to a preferred embodiment, the interconnector and the adjoining supporting member are electrically connected with each other by the electric collecting member so that a plurality of electrochemical cells can be easily connected in series.

According to a preferred embodiment, it is provided a seal member for sealing the interconnector and the supporting member in air-tight manner. Although the material of the seal member is not particularly limited, it is required resistance against oxidation and reduction at the operating temperature of the electrochemical cell. Specifically, it may be listed a glass containing silica as main component, crystallized glass, metal solder or the like. It may be further listed an O-ring, a C-ring, an E-ring, or a compression sealing member such as a metal jacket gasket, a mica gasket or the like.

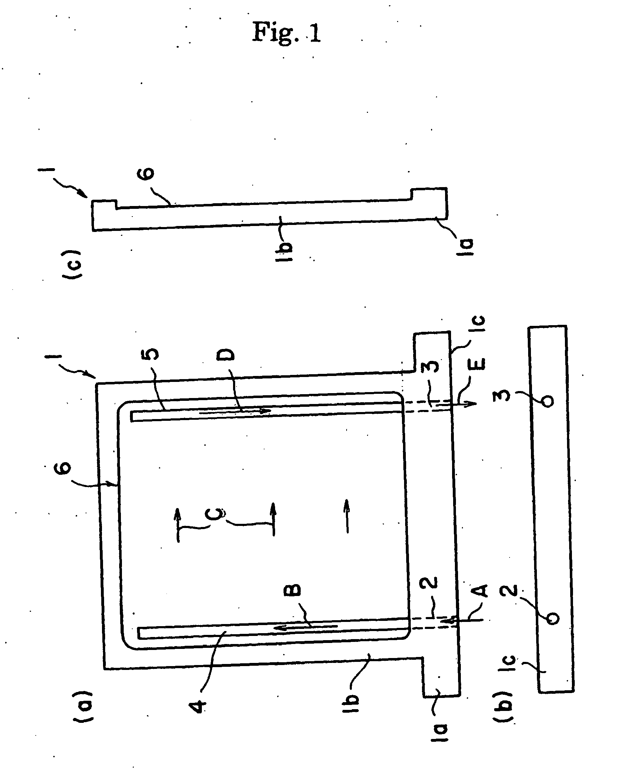

Figs. 1 to 7 show an electrochemical device according to one embodiment of the present invention.
Fig. 1 (a) is a front view showing a supporting member 1, Fig. 1 (b) is a view showing a bottom face of the supporting member 1, and Fig. 1 (c) is a view showing a side face of the supporting member. The supporting member 1 has a main body 1b of the shape of flat plate, and a flange portion 1a protruding downwardly from the main body 1b. A space 6 is formed in the main body 1b for forming a first flow route for a first gas. A pair of grooves 4 and 5 are formed in the space 6. The grooves 4 and 5 are communicated with gas supply hole 2 and gas discharge hole 3, respectively. The gas supply hole 2 and gas discharge hole 3 open at a bottom face 1c of the flange portion 1a.

Gas supplied from a manifold member described later is supplied through the supply hole 2 as an arrow A, flows in the groove 4 as an arrow B, and then flows from the groove 4 to the groove 5 as an arrow C. The gas then flows in the groove 5 as an arrow D and is discharged through the discharge hole 3 as an arrow E into the manifold member.

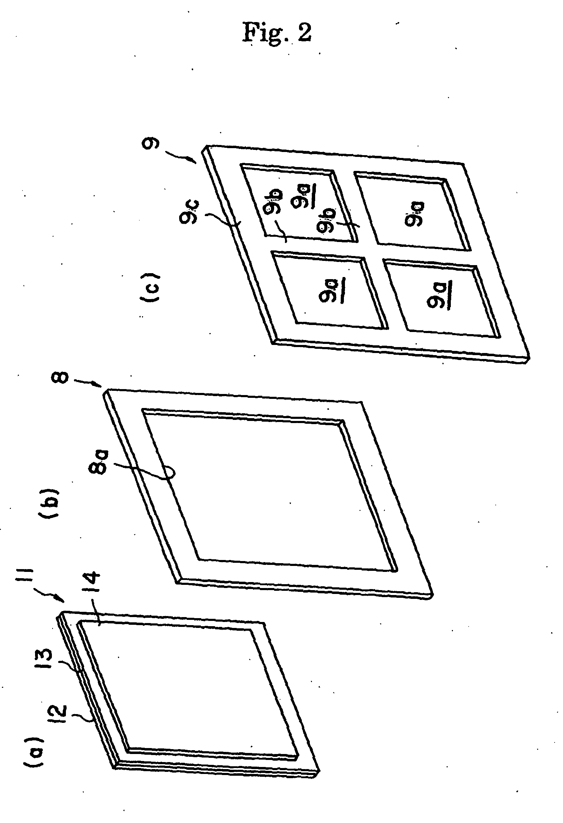

Fig. 2 (a) is a perspective view showing an electrochemical cell 11 used in the present example. The electrochemical cell 11 has a first electrode 12, a solid electrolyte layer 13 and a second electrode 14. The electrochemical cell 11 may have an additional part such as a porous substrate.

Fig. 2 (b) is a perspective view showing a sealing member 8 used in the present example. A space 8a is formed in the seal member 8 for containing and surrounding the cell 11 in the space 8a. Fig. 2 (c) is a perspective view showing an interconnector 9. The interconnector 9 has an outer frame 9c and an inner frame 9b extending inwardly from the outer frame 9c. The space 9a is formed between them for passing the second gas through it.

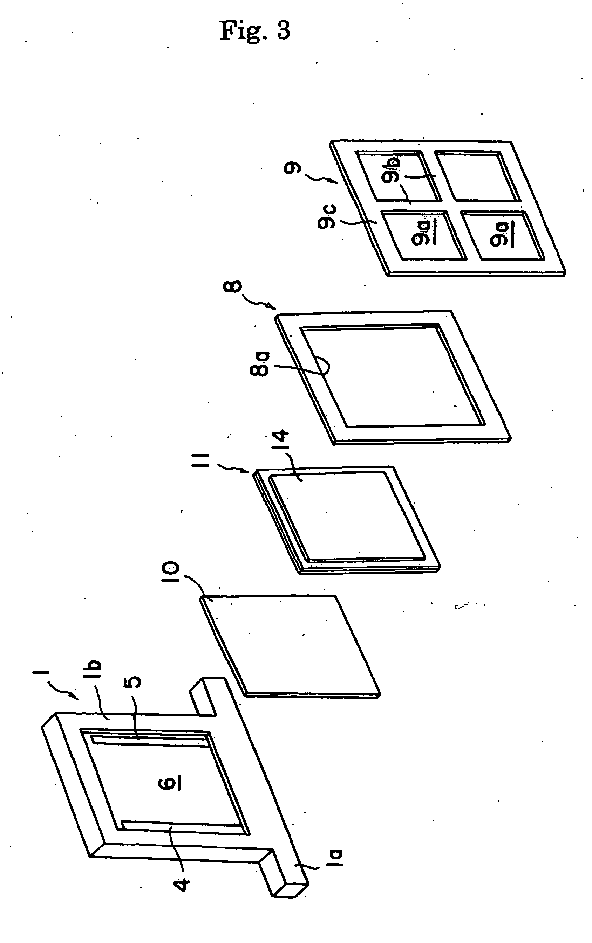

Fig. 3 is an exploded perspective view showing the supporting member 1, the permeable and conductive material 10, the electrochemical cell 11, the seal member 8 and the interconnector 9. These parts are combined to provide an assembly.

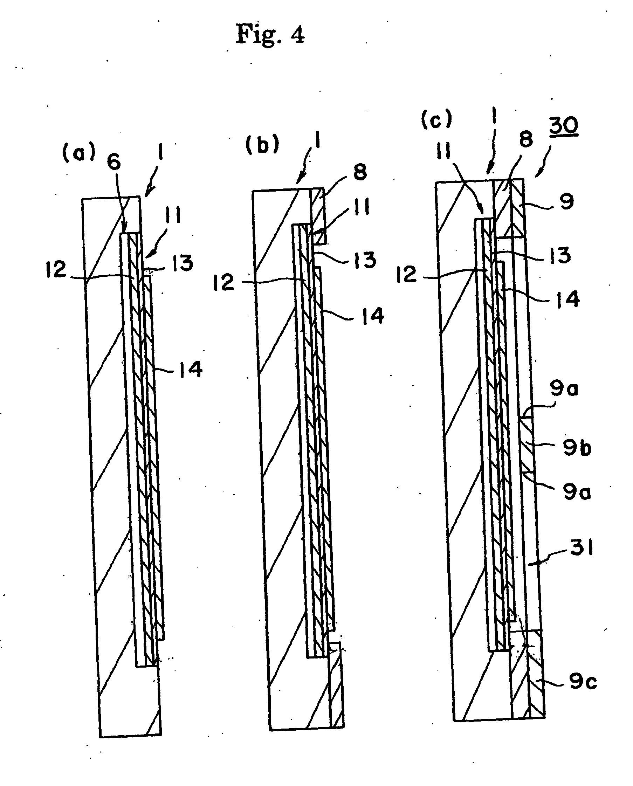

That is, as shown in Fig. 4 (a), the electrochemical cell 11 is contained and fixed in the space 6 of the supporting member 1. A flow route 6 for the first gas is formed between the electrochemical cell 11 and supporting member 1. The first gas flows in the gas flow route 6 as shown in Fig. 1.

According to the present example, the permeable and conductive material 10 is contained in the flow route 6 so that the supporting member 1 is electrically connected to the first electrode 12 of the cell 11 (not shown in Fig. 4). Such material 10 is, however, not indispensable. In the case that the material 10 is not provided, for example, the electrode 12 of the cell 11 is directly contacted with the supporting member 1 for the electrical connection. In this case, a groove for flow of the first gas may be formed over the electrode 12 of the cell 11 or the space 6 of the supporting member 1. Further, the electrode 12 of the cell 11 and the supporting member 1 may be electrically connected with each other.

The conductive and permeable material includes a metal such as nickel, a nickel-based alloy such as Inconel, Nichrome or the like, or an iron-based alloy such as stainless steel, and a conductive ceramics such as lanthanum chromite. Further, the shape of the permeable material includes felt, porous sintered body, mesh or the like.

Then, as shown in Fig. 4 (b), the sealing member 8 is provided and positioned at an end face of the supporting member 1. At this stage, the sealing member 8 surrounds the whole circumference of the cell 11. Then, as shown in Fig. 4 (c), the interconnector 9 is provided and positioned on the sealing member 8 to form an assembly 30. The sealing member is made insulating to electrically insulate the interconnector 9, the supporting member 1 and the first electrode 12. At the same time, the permeable and conductive material (not shown) is contained in the flow route 31 inside of the interconnector so that the second electrode 14 and the interconnector 9 are electrically connected with each other.

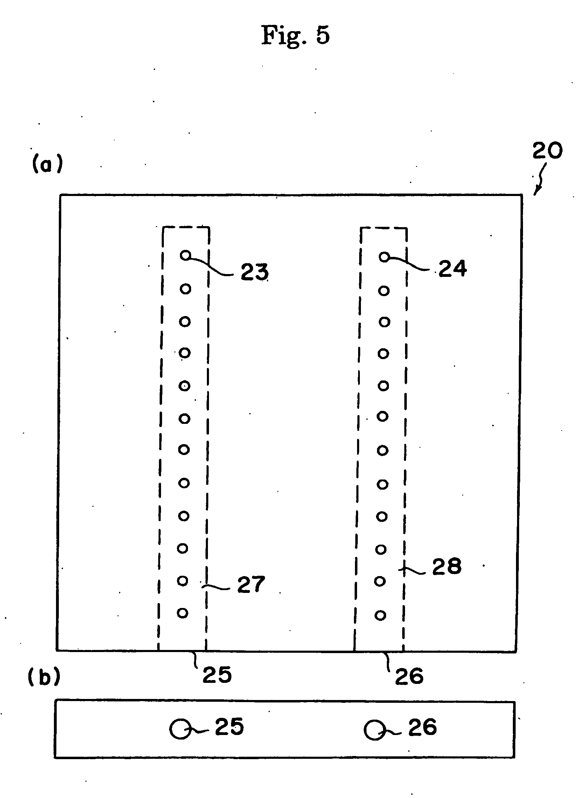

Fig. 5 (a) is a plan view showing a manifold member 20, and Fig. 5 (b) is a view showing a side face of the manifold member 20.
A supply hole 25 and a discharge hole 26 for the second gas are formed at the side face of the manifold member 20. A supply tube portion 27 is extended from the supply hole, and a predetermined number of gas supply holes 23 are extended upwardly from the supply tube portion 27. Further, a discharge tube portion 28 is extended from the discharge hole 26, and a predetermined number of discharge holes 24 are formed upwardly from the discharge tube portion 28.

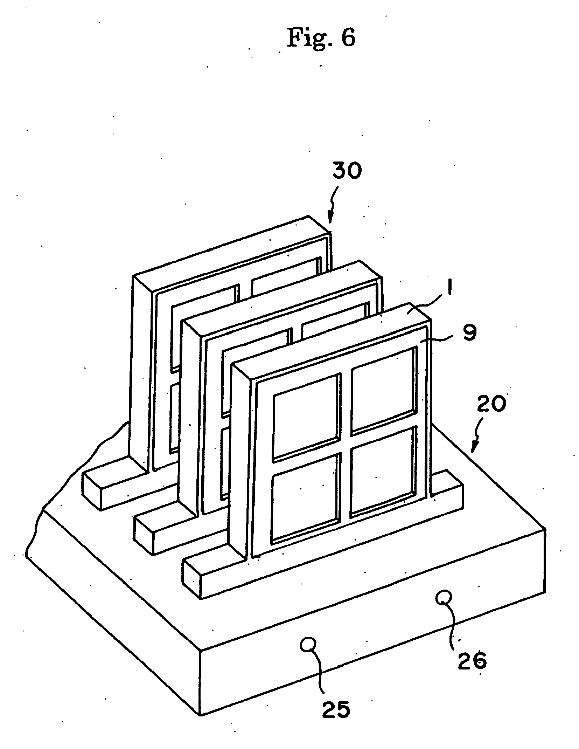

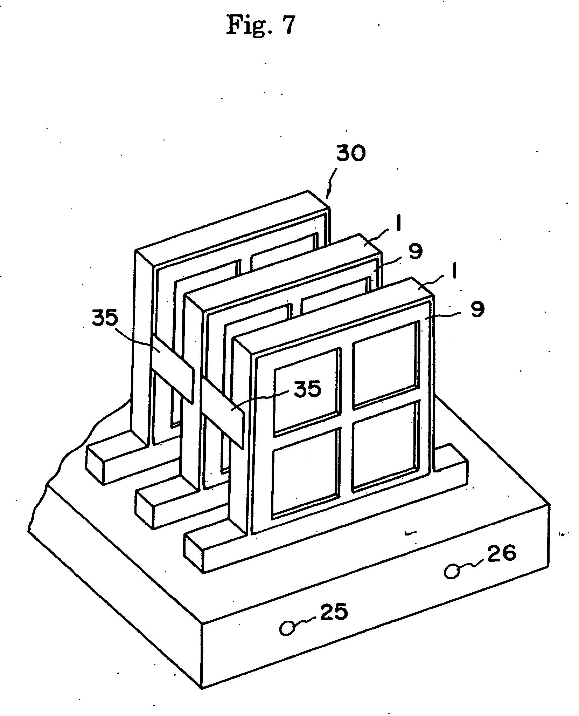

A predetermined number of the assemblies 30 shown in Figs. 3 and 4(c) are provided and fixed on the manifold member 20 as shown in Fig. 6. Although the method of fixing is not particularly limited, appropriate mechanical fixing method may be applied because the supporting member 1 and the manifold member 20 are made of metals. As shown in Fig. 7, adjoining supporting member 1 and interconnector 9 are electrically connected with each other by an electrical collecting member 35. The adjoining electrochemical cells 11 are thereby electrically connected in series.

For example, when SOFC is used as the cell, oxidizing gas passes in the spaces between the supporting members and fuel gas is passes into the flow routes between the supporting members and electrochemical cells, respectively. In this case, electrons (carried as oxygen ions in solid electrolyte layer) pass through the cathode 12 and the solid electrolyte layer 13 as shown in Fig. 2. The electrons are then passed through the anode 14, the permeable and conductive material described above and the supporting member 1, and then into the cathode 12 and the interconnector 9 of the adjacent assembly through the electrical collecting member 35.

According to the embodiments described above, the ceramic electrochemical cell 11 is supported with the metal supporting member 1, and the gas flow route 6 is formed between the supporting member 1 and the electrochemical cell 11. The gas supply hole 23 and the gas discharge hole 24 are formed in the metal manifold member 20 so that the holes are communicated with the gas flow route 6. It is thus possible to perform the gas supply into and the gas discharge from the manifold member 20. Further, each electrochemical cell 11 is supported with the metal supporting member 1 and the supporting member 1 is fitted to the manifold member 20. It is thus possible to stack many supporting members and electrochemical cells.

It is thereby possible to avoid excessive load onto each electrochemical cell 11 and the fracture of the cells, so that many cells can be stacked together. Moreover, the flow route 6a for the first gas is formed between the adjacent cell 11 and supporting member 1, and the metal manifold 20 and supporting members 1 are connected with each other to provide manifold structure for performing the supply of the gas into and the discharge of the gas from the flow route. The gas seal structure can be thereby simplified.

### EXAMPLES

### (Production of solid oxide fuel cell)

### (Production of anode substrate)

50 weight parts of nickel oxide powder having an average particle size of 1 µ m and 50 weight parts of yttria-stabilized zirconia (8YSZ, "TZ-8Y: Tosoh) were mixed, and polyvinyl alcohol (PVA) as a binder and pure water were added thereto to obtain slurry. The slurry was dried and granulated with a spray drier to obtain powder for anode substrate. The powder was subjected to press molding to obtain a flat plate having a length of 150 mm, a width of 150 mm and a thickness of 1.5 mm. Thereafter, the flat plate was sintered at 1400 ° C in air for 3 hours to obtain an anode substrate 12.

### (Production of solid electrolyte film)

8 mol % yttria stabilized zirconia (8YSZ) powder was used as a material for solid electrolyte. Water and a binder were added to the 8YSZ powder and then mixed for 16 hours in a ball mill. The thus obtained slurry was applied and dried on the anode substrate 12 and then subjected to sintering at 1400 ° C in air for 2 hours to obtain a solid electrolyte layer 13 having a thickness of 10 µ m. The thus obtained substrate was subjected to grinding to obtain a sintered body of the anode substrate 12 and solid electrolyte film 13. The sintered body has a length of 100 mm, a width of 100 mm and a thickness of 1 mm.

### (Formation of cathode)

Ethyl cellulose as a binder and terpineol as a solvent were added to cathode material of La_{0.8}Ca_{0.2}MnO₃ (LCM) powder having an average particle diameter of 1 µ m to obtain paste. The paste was shaped to a film by screen printing to a size of 90 mm and 90 mm. The film was dried and sintered at 1200 ° C for 1 hour to obtain a planar cell 11 having the anode substrate 12, the solid electrolyte 13 and an cathode 14.

### (Production of metal supporting member 1)

It was produced the supporting member 1 shown in Fig. 1. The supporting member 1 was produced by processing an SUS 430 plate having a length of 130 mm, a width of 150 mm and a thickness of 8 mm to a shape shown in Fig. 1.

### (Production of interconnector 9 on cathode side)

An SUS 430 plate having a length of 130 mm, a width of 130 mm and a length of 3 mm was processed as shown in Fig. 2 (c) to produce an interconnector 9. An opening 9a was formed in a central portion of the interconnector 9 for the gas supply to the cathode side.

### (Production of assembly)

The assembly 30 was produced as described above referring to Figs. 3 and 4. Nickel felt was contained in the space 6 as the conductive and permeable material 10. The fuel cell 11 was set and the insulating glass sealing member 8 was further inserted. The cathode interconnector 9 was mounted thereon. Platinum felt was inserted, as the conductive and permeable material, between the cathode interconnector 9 and the cathode 14. They were subjected to heat treatment for bonding.

### (Production of metal manifold member 20)

An SUS 430 plate having a width of 150 mm, a length of 300 mm and a thickness of 15 mm was processed as shown in Fig. 5 to produce the manifold member 20.

Twenty assemblies 30 described above were mounted on the metal manifold member 20 to produce a stack. The bottom face of the supporting member 1 was mounted on the manifold member 20. The fuel supply hole 2 of the supporting member 1 was thus communicated with the fuel supply hole 23 of the manifold member 20, and the fuel supply hole 3 of the supporting member 1 was communicated with the fuel discharge hole 24 of the manifold member. An insulating glass sealing member was inserted between the metal manifold member 20 and the supporting member 1 upon the fixing of each assembly for the sealing and electrical insulation of the metal manifold member 20 and the supporting member 1. Stainless steel plates were used as the electrical collecting members 35.

### (Production of cell of comparative example)

The sintered body of the solid electrolyte 13/anode substrate 12 produced as described above was processed to a piece of a length of 100 mm, a width of 100 mm and a thickness of 1 mm. The cathode having a length of 90 mm and a width of 90 mm was formed as described in the section of "production of cathode" to produce a planar cell.

### (Production of stack of comparative example)

A plate made of SUS430 having a length of 120 mm, a width of 120 mm and a thickness of 6 mm was processed. That is, four gas flow routes each having a width of 10 mm and a length of 90 mm were formed in the peripheral portion, and eight grooves for gas flow each having a width of 5 mm and a depth of 2 mm were formed from the gas flow routes, respectively, to produce an interconnector. Air is flown over the surface side and fuel is flown over the back side of the interconnector. The planar cell was mounted in the center of the metal interconnector. Twenty planar cells and twenty interconnectors were alternately laminated and then fixed using stack-fixing bolts to provide an integrated body. Insulating glass seal was used for the gas sealing of the stack.

Fuel gas was supplied to the anode side of the cell through a supply tube for fuel gas provided in the interconnector, and then discharged through a fuel gas discharge tube to the outside of the stack. Air was supplied to the cathode side of the cell through an air supply tube provided in the interconnector, and then discharged through an air discharge tube to the outside of the stack.

### (Evaluation test of generation)

The stack was set in an electrical furnace. A voltage cable and a current cable were connected to each of the supporting member and interconnectors provided in both sides of the stack. N₂ was flown in the anode side and air was flown in the cathode side while the temperature was elevated to 800 ° C. At the time point that the temperature reached 800 ° C, H₂ was flown in the anode side to perform the reduction treatment. After three hours of reduction treatment, it was evaluated the current-voltage property of the stack. Further, the stack was subjected to 10 thermal cycles each including one temperature ascending step and one descending step. After the 10 thermal cycles, the current-voltage property of the stack was evaluated and the fracture of the cell was confirmed. Table 1 shows the generation property at 800 ° C and the observation of fracture of the cell after the temperature descending step. Further, table 2 shows the change of OCV of each of the stacks (20 cells) according to the inventive and comparative examples.

**Table 1**

| | Generation Output (W at 0.7V) | Generation output after ten thermal cycles (W at 0.7V) | Number of broken cells after ten thermal cycles (number) |
|---|---|---|---|
| Inventive Example | 312 | 307 | 0 |
| Comparative Example | 272 | 239 | 6 |

**Table 2**

| Stack No. | Initial OCV | | OCV after ten thermal cycles | |
|---|---|---|---|---|
| | Inventive example | Comparative Example | Inventive Example | Comparative Example |
| 1 | 1.04 | 1.03 | 1.04 | 0.87 |
| 2 | 1.03 | 1.03 | 1.03 | 1.04 |
| 3 | 1.04 | 1.04 | 1.03 | 1.04 |
| 4 | 1.05 | 0.75 | 1.05 | 0.72 |
| 5 | 1.04 | 1.04 | 1.03 | 0.88 |
| 6 | 1.03 | 1.03 | 1.04 | 1.03 |
| 7 | 1.03 | 1.05 | 1.03 | 1.04 |
| 8 | 1.03 | 1.05 | 1.04 | 1.03 |
| 9 | 1.04 | 1.04 | 1.04 | 0.84 |
| 10 | 1.05 | 1.04 | 1.03 | 1.05 |
| 11 | 1.04 | 1.04 | 1.04 | 1.04 |
| 12 | 1.04 | 1.03 | 1.04 | 1.03 |
| 13 | 1.04 | 0.82 | 1.05 | 0.75 |
| 14 | 1.06 | 1.02 | 1.05 | 1.06 |
| 15 | 1.05 | 1.02 | 1.05 | 1.05 |
| 16 | 1.04 | 1.04 | 1.03 | 1.04 |
| 17 | 1.03 | 1.05 | 1.03 | 1.03 |
| 18 | 1.03 | 0.86 | 1.04 | 0.79 |
| 19 | 1.04 | 1.04 | 1.04 | 1.04 |
| 20 | 1.04 | 1.03 | 1.05 | 1.04 |

According to the inventive examples, it was obtained a higher generation power compared with that of the comparative example. Further, according to the comparative example, it was observed a considerable reduction of OCV in three of the stacks. It was thus considered that the cell was broken. It was considered that an excessive stress was applied, at some points, exceeding the fracture stress on the cell to induce the fracture during the assembling of the cells and interconnectors.

Further, after the stacks were subjected to the ten thermal cycles, a reduction of generation power was hardly observed according to the inventive example and a further reduction of the output was observed according to the comparative example. A reduction of OCV of the stack was not observed according to the inventive example. A considerable reduction of OCV was observed in six out of twenty samples according to the comparative example. The presence of the fracture of the cells was observed after the thermal cycle test. As a result, the fracture was not observed in all of the twenty cells according to the inventive example, and the fracture was observed in six out of the twenty cells according to the comparative example.

As described above, according to the present invention, it is possible to prevent the unbalance and local concentration of the stress caused by lamination of the whole cells and to provide a stack of excellent reliability by preventing the fracture of cells.

## Claims

1. An electrochemical device comprising:
a plurality of ceramic electrochemical cells (11) each comprising a first electrode (12) contacting a first gas, a solid electrolyte layer (13) and a second electrode (14) contacting a second gas;
for each said cell (11), a supporting member (1) supporting the cell and providing a flow route for said first gas to the cell; and
a metal manifold member (20) supporting said supporting members (1), said supporting members (1) being arranged in an array extending along said manifold member (20), and said manifold member comprising a gas supply passage (25, 26) formed therein communicating with each said flow route for said first gas at the respective cells (11);
**characterised in that**:
each said supporting member (1) is a metal member and defines, between itself and said first electrode (12) of the respective said cell (11), a closed space (6) at one side of the cell in which said first gas flows, and
said metal manifold member (20) has both said gas supply passage (25) and also a gas discharge passage (26) formed therein, both said passages communicating with said closed spaces (6) for supply and discharge of the gas to and from the cell (1).

2. The electrochemical device of claim 1, comprising a flow route for said second gas formed between the plurality of said supporting members (1).

3. The electrochemical device of claim 1 or 2, further comprising an interconnectors (9) provided between the plurality of said supporting members (1), wherein a flow route for said second gas is formed between said interconnector (9) and said electrochemical cell (11).

4. The electrochemical device of claim 3, further comprising a sealing member (8) for sealing said interconnector (9) and said supporting member (1) in air-tight manner.

5. The electrochemical device of any one of claims 1 to 3, further comprising an electrical collecting member (35) for electrically connecting said adjacent electrochemical cells (11).

## Patentansprüche

1. Elektrochemische Vorrichtung, die Folgendes umfasst:
eine Vielzahl elektrochemischer Keramikzellen (11), die jeweils eine erste Elektrode (12), die mit einem ersten Gas in Kontakt steht, eine Festelektrolytschicht (13) und eine zweite Elektrode (14), die mit einem zweiten Gas in Kontakt steht, umfassen;
ein Trägerelement (1) für jede Zelle (11), das die Zelle trägt und einen Strömungspfad für das erste Gas zu der Zelle bereitstellt; und
ein Metallverteilerelement (20), das die Trägerelemente (1) trägt, wobei die Trägerelemente (1) in einer Anordnung vorliegen, die sich entlang des Verteilerelements (20) erstreckt und wobei das Verteilerelement einen Gaseinströmungsdurchlass (25, 26) umfasst, der in diesem ausgebildet ist und mit jedem der Strömungspfade für das erste Gas in den entsprechenden Zellen (11) kommuniziert;
**dadurch gekennzeichnet, dass**:
jedes der Trägerelemente (1) ein Metallelement ist und zwischen sich selbst und der ersten Elektrode (12) der jeweiligen Zelle (11) auf einer Seite der Zelle einen geschlossenen Raum (6) definiert, in den das erste Gas strömt, und
das Metallverteilerelement (20) sowohl einen Gaseinströmungsdurchlass (25) als auch einen Gasausströmungsdurchlass (26) aufweist, die in diesem ausgebildet sind, wobei beide Durchlässe mit den geschlossenen Räumen (6) zum Einströmen und zum Ausströmen von Gas in die und aus der Zelle (11) kommunizieren.

2. Elektrochemische Vorrichtung nach Anspruch 1, die einen Strömungspfad für das zweite Gas umfasst, der zwischen der Vielzahl an Trägerelementen (1) ausgebildet ist.

3. Elektrochemische Vorrichtung nach Anspruch 1 oder 2, die ferner ein Zwischenstück (9) umfasst, das zwischen der Vielzahl an Trägerelementen (1) bereitgestellt ist, wobei ein Strömungspfad für das zweite Gas zwischen dem Zwischenstück (9) und der elektrochemischen Zelle (11) ausgebildet ist.

4. Elektrochemische Vorrichtung nach Anspruch 3, die ferner ein Dichtungselement (8) umfasst, um das Zwischenstück (9) und das Trägerelement (1) luftdicht abzudichten.

5. Elektrochemische Vorrichtung nach einem der Ansprüche 1 bis 3, die ferner ein elektrisches Verbindungselement (35) umfasst, um benachbarte elektrochemische Zellen (11) elektrisch zu verbinden.

## Revendications

1. Dispositif électrochimique comprenant:
une pluralité de piles électrochimiques céramiques (11) comprenant chacune une première électrode (12) venant en contact avec un premier gaz, une couche d'électrolyte solide (13) et une seconde électrode (14) venant en contact avec un second gaz;
pour chaque pile précitée (11), un élément de support (1) supportant la pile et réalisant un chemin d'écoulement pour ledit premier gaz à la pile; et
un élément collecteur métallique (20) supportant lesdits éléments de support (1), lesdits éléments de support (1) étant agencés selon un groupement s'étendant le long dudit élément collecteur (20), et ledit élément collecteur comprenant un passage d'amenée de gaz (25, 26) formé dans celui-ci communiquant avec chaque chemin d'écoulement précité pour ledit premier gaz aux piles respectives (11);
**caractérisé en ce que**:
chaque élément de support précité (1) est un élément métallique et définit entre lui-même et ladite première électrode (12) de ladite pile respective (11), un espace fermé (6) à un côté de la pile dans lequel ledit premier gaz s'écoule, et
ledit élément collecteur métallique (20) possède à la fois ledit passage d'amenée de gaz (25) et également un passage d'évacuation de gaz (26) formé dans celui-ci, les deux passages précités communiquant avec lesdits espaces fermés (6) pour l'amenée et l'évacuation du gaz à et de la pile (1).

2. Dispositif électrochimique selon la revendication 1, comprenant un chemin d'écoulement pour ledit second gaz formé entre la pluralité desdits éléments de support (1).

3. Dispositif électrochimique selon la revendication 1 ou 2, comprenant en outre un interconnecteur (9) réalisé entre la pluralité desdits éléments de support (1), où un chemin d'écoulement pour ledit second gaz est formé entre ledit interconnecteur (9) et ladite cellule électrochimique (11).

4. Dispositif électrochimique selon la revendication 3, comprenant un élément d'étanchéité (8) pour rendre étanche ledit interconnecteur (9) et ledit élément de support (1) d'une manière étanche à l'air.

5. Dispositif électrochimique selon l'une quelconque des revendications 1 à 3, comprenant en outre un élément de connection électrique (35) pour connecter électriquement lesdites piles électrochimiques adjacentes (11).
